# EUROPEAN PATENT SPECIFICATION

(11) **EP 2 896 853 B1**
(45) Date of publication and mention of the grant of the patent: **09.05.2018**
(21) Application number: 13836689.3
(22) Date of filing: 04.09.2013
(51) Int. Cl.: F16J 15/34, F16C 33/72

(54) **SLIDE PART**
SCHIEBEELEMENT
PARTIE COULISSANTE

(30) Priority: 11.09.2012 JP 2012199489
(43) Date of publication of application: 22.07.2015
(73) Proprietor: Eagle Industry Co., Ltd., Minato-ku Tokyo 105-8587 (JP)
(72) Inventor: TOKUNAGA Yuichiro, Tokyo 105-8587 (JP)
(74) Representative: WSL Patentanwälte Partnerschaft mbB
(86) International application number: PCT/JP2013/073746
(87) International publication number: WO 2014/042045

(56) References cited:
- EP-A1- 2 740 974
- EP-A1- 2 754 930
- EP-A1- 2 853 787
- WO-A1-2009/087995
- WO-A1-2013/031529
- JP-A- H0 735 242
- JP-A- H09 329 247
- JP-A- 2005 180 652
- JP-A- 2009 014 183
- JP-A- 2012 002 295
- US-A1- 2011 101 616

## Description

### {TECHNICAL FIELD}

The present invention relates to a sliding component suitable for mechanical seals, bearings and other sliding mechanisms, for example. In particular, the present invention relates to a sliding component for seal rings, bearings, etc., that must reduce friction by retaining a fluid on the sealing face and also prevent the fluid from leaking out of the sealing face.

### {BACKGROUND ART}

For a mechanical seal, which is an example of a sliding component, to maintain sealing property for a long period of time, it must satisfy the mutually exclusive conditions of "seal" and "lubricate." Particularly in recent years, the demand for lower friction is increasing further in the area of environmental protection, etc., as a means to prevent the sealed fluid from leaking while reducing mechanical loss at the same time. One way to reduce friction is to generate dynamic pressure between the sealing faces by means of rotation to create the so-called fluid lubrication state where the surfaces slide against each other with a liquid film in between. In this case, however, positive pressure generates between the sealing faces and the fluid flows out of the sealing faces from the part subject to the positive pressure. This is the so-called lateral leak that occurs with bearings and corresponds to how seals leak.

In the case of liquid seals, where the viscosity of the liquid is greater than that of gas, the dynamic pressure effect is achieved between the two surfaces due to their minute undulations and surface irregularities that are present even when both are planes. Accordingly, liquid seal structures are often designed to give priority to sealing performance. On the other hand, however, several mechanisms have been contrived to demonstrate the pumping effect of pulling back the leaked liquid to the high-pressure side in order to seal and lubricate at the same time. For example, Patent Literature 1 discloses an invention which is a rotating ring having several spiral grooves on its shaft seal area in the circumferential direction so as to move the fluid toward the high-pressure chamber.

Also among other inventions relating to a sliding component, one invention is known where a suction means is formed on the sealed-fluid side of the sealing face in order to introduce the sealed fluid to the sealing face, and the sealed fluid thus introduced is stored in two dimples formed on the outer periphery side and inner
periphery side of the sealing face in the radial direction and separated by a dam, while being pumped in the dimple on the inner periphery side in the radial direction, so as to prevent leakage of the sealed fluid from the seal area positioned on the inner periphery side of the two dimples in the radial direction (refer to Patent Literature 2) .

However, the inventions described in Patent Literatures 1 and 2 above are subject to a pressure difference between the inner periphery and outer periphery of the seal or other sealing face, thus requiring a pumping action to counter the pressure, and are potentially unable to push back the fluid depending on the level of this pressure. This creates the problem of more fluid leaking when the pressure difference is large, although leakage can be prevented when the pressure difference is small.

US 2011/0101616 A1 relates to a mechanical seal sliding member with lubricating characteristics. In the mechanical seal sliding member on a sliding surface a plurality of grating sections are formed separately in each of which a plurality of linear shape ridge portions parallel to each other are formed in a predetermined region with a predetermined pitch.

### {CITATION LIST}

### {Patent Literature}

Patent Literature 1: Japanese Patent Laid-open No. Hei 8-277941 (Page 5, FIG. 6)
Patent Literature 2: Japanese Patent Laid-open No. 2005-180652
Patent Literature 3: United States Patent Application Publication US 2011/0101616 A1

### {SUMMARY OF INVENTION}

### {Technical Problem}

When the sealing faces of two parts are each constituted by a smooth surface, as is the case of a general mechanical seal, not only the sealed fluid forms a film between the sealing faces, but it is known that cavitation occurring in the fluid also forms a phase between them (refer to ASME Paper No. 65-Lub-11 by Hamilton, Walowit and Allen (1965)). In other words, a phase constituted by liquid (sealed liquid) (hereinafter referred to as "liquid phase") and another phase constituted by gas (hereinafter referred to as "gas phase") are formed between the sealing faces.

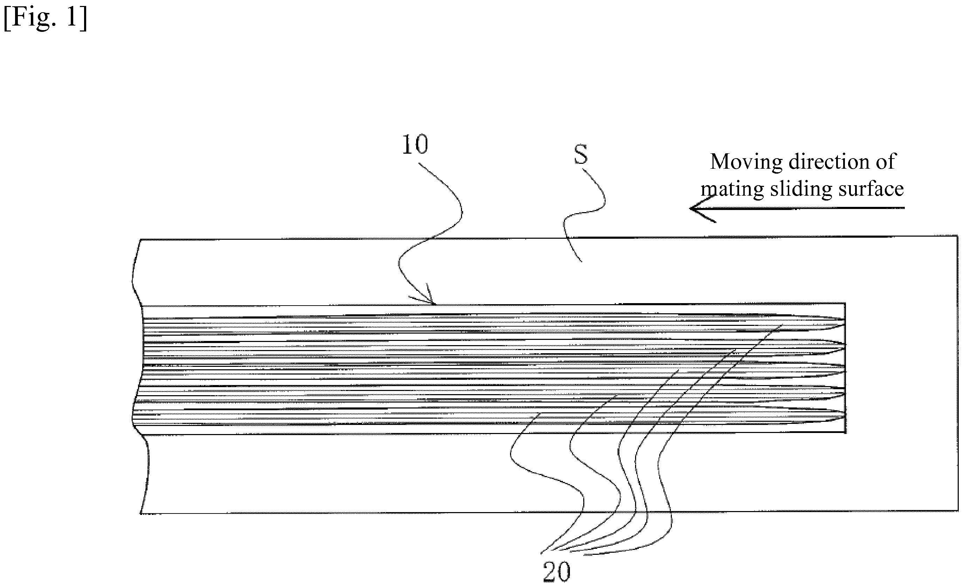

Also, as shown in FIG. 1, it is generally known that a streak-like flow of fluid 20 due to cavitation generates in a dimple or other concaved part 10 formed on the sealing face S.

An object of the present invention is to provide a sliding component that can prevent leakage regardless of the level of differential pressure between the inner periphery and outer periphery of the sealing face by controlling the streak-like flow of fluid due to cavitation that occurs in a dimple or other concaved part (referred to as "dimple" in this Specification) formed on the sealing face.

### {Principles}

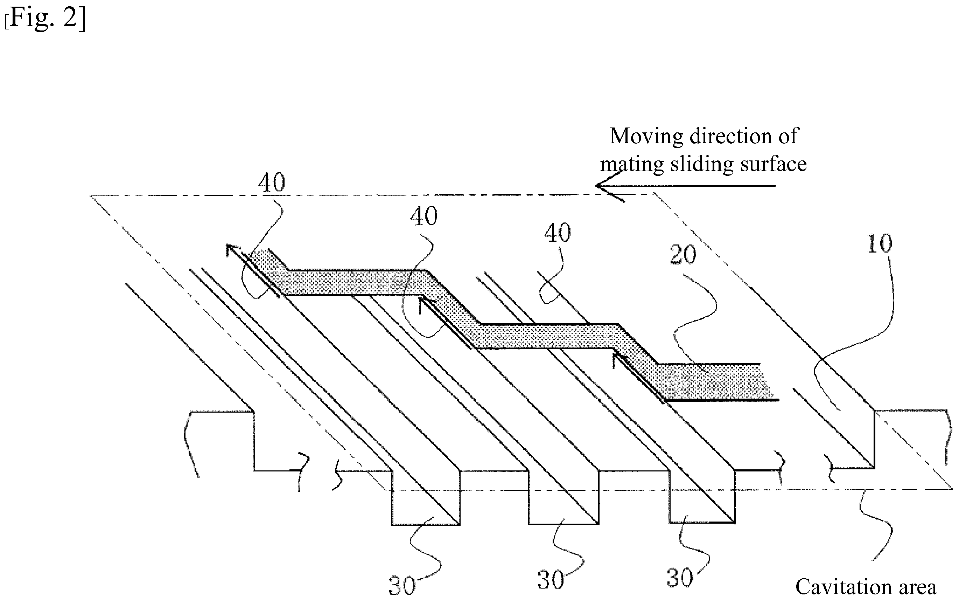

The inventors of the present invention gained the knowledge, during the course of research on fluid lubrication action in a dimple on the sealing face of a mechanical seal, etc., that, when grooves 30 with directionality are provided at the bottom of a dimple formed on the sealing face, as shown in FIG. 2, the direction of a streak-like flow of fluid 20 that generates in the area of cavitation occurring in the dimple 10 can be changed or controlled. This is probably explained by the fact that the cavitation is internally filled with gas whose viscosity is sufficiently small compared to that of liquid, and the resulting good fluidity keeps the pressure in the cavitation constant, which in turn acts to control the streak-like flow in the cavitation regardless of the differential pressure between the inner periphery and outer periphery of the sealing face.

In other words, when the grooves 30 with directionality are present at the bottom of the dimple 10, edges 40 of the grooves 30 act upon the gas-liquid interface as geometrical barriers to prevent the movement of the streak-like flow of fluid 20 to pass over the grooves 30, and as a result, the streak-like flow of fluid 20 moves to a certain degree along the edges 40 of the grooves 30 and consequently the streak-like flow inside the cavitation is controlled.

The geometrical barrier action of edges is described in detail in Japanese Patent Laid-open No. 2011-185292, which is an application for patent filed by the same applicant of the present invention.

### {Solution to Problem}

To achieve the aforementioned object, firstly the sliding component proposed by the present invention is characterized by the features mentioned in claim 1. Dimples are provided on one sealing face of a pair of sliding parts that mutually slide relative to each other, and grooves with directionality are provided in a cavitation formation area in each dimple.

According to these features, the streak-like flow of fluid that generates in the dimple due to cavitation can be controlled and thus leakage can be prevented regardless of the level of differential pressure between the inner periphery and outer periphery of the sealing face. To describe this in detail, the cavitation is internally filled with gas whose viscosity is sufficiently low compared to that of liquid, and the resulting good fluidity keeps the pressure in the cavitation constant, which in turn acts to control the streak-like flow in the cavitation regardless of the differential pressure between the inner periphery and outer periphery of the sealing face, and if grooves with directionality are present in the dimple, edges of the grooves act upon the gas-liquid interface as geometrical barriers to prevent the movement of the streak-like flow of fluid to pass over the grooves, and as a result, the streak-like flow of fluid moves to a certain degree along the edges of the grooves and consequently the streak-like flow inside the cavitation is controlled and leakage is prevented.

Furthermore, secondly, the sliding component proposed by the present invention is characterized, in addition to the first features, in that the grooves with directionality are provided at least on the low-pressure fluid side of the cavitation formation area.

According to these features, the control of the streak-like flow of fluid by the grooves with directionality is implemented at least on the low-pressure fluid side of the dimple, which prevents leakage to the low-pressure fluid side.

Furthermore, thirdly, the sliding component proposed by the present invention is characterized, in addition to the first or second features, in that continuous grooves that communicate with the high-pressure fluid side are provided at least in the location other than the cavitation formation area in the dimple.

According to these features, the positive pressure downstream of the dimple is released, which in turn reduces the upstream pressure and makes it easier for cavitation to occur upstream, and consequently the cavitation formation area extends to near the downstream side of the dimple and the direction of the streak-like flow of fluid caused by the cavitation formation area can be controlled much better as a result. In addition, fluid that has flowed into the positive pressure area can be returned to the high-pressure fluid side.

Furthermore, fourthly, the sliding component proposed by the present invention is characterized, in addition to the first or second features, in that the grooves with directionality provided in the cavitation formation area in the dimple are formed in such a way that their directions become symmetrical relative to the sliding direction of the sealing face with reference to the center of the sliding direction of the dimple.

According to these features, the sliding component need not be replaced regardless of whether the rotating direction of the mating sealing face is forward or reverse.

### {Advantageous Effects of Invention}

The present invention offers excellent effects as described below:
(1) Dimples are provided on one sealing face of a pair of sliding parts that mutually slide relative to each other, and grooves with directionality are provided in a cavitation formation area in each dimple, as a result of which the streak-like flow of fluid that generates in the dimple due to cavitation can be controlled, which in turn prevents leakage regardless of the level of differential pressure between the inner periphery and outer periphery of the sealing face.
(2) Grooves with directionality are provided at least on the low-pressure fluid side of the cavitation formation area, as a result of which control of the streak-like flow of fluid by the grooves is implemented at least on the low-pressure fluid side of the dimple, which in turn prevents leakage to the low-pressure fluid side.
(3) Continuous grooves that communicate with the high-pressure fluid side are provided at least in the location other than the cavitation formation area in the dimple, as a result of which the positive pressure downstream of the dimple is released, which in turn reduces the upstream pressure and makes it easier for cavitation to occur upstream, and consequently the cavitation formation area extends to near the downstream side of the dimple and the direction of the streak-like flow of fluid caused by the cavitation formation area can be controlled much better as a result. In addition, fluid that has flowed into the positive pressure area can be returned to the high-pressure fluid side.
(4) Grooves with directionality provided in the cavitation formation area in the dimple are formed in such a way that their directions become symmetrical relative to the sliding direction of the sealing face with reference to the center of the sliding direction of the dimple, as a result of which the sliding component need not be replaced regardless of whether the rotating direction of the mating sealing face is forward or reverse.

### {BRIEF DESCRIPTION OF DRAWINGS}

[FIG. 1] Drawing explaining the streak-like flow of fluid due to cavitation that generates in a dimple formed on the sealing face.
[FIG. 2] Drawing explaining how the direction of the streak-like flow of fluid in the cavitation area that generates in a dimple formed on the sealing face is changed when grooves with directionality are provided at the bottom of the dimple.
[FIG. 3] Longitudinal section view showing an example of a mechanical seal that pertains to an example of the present invention.
[FIG. 4] Sealing faces of sliding parts pertaining to Example 1 of the present invention, where the dimple has a quadrilateral shape in (a), while it has a circular shape in (b) .
[FIG. 5] (a) is a drawing explaining a positive-pressure generation mechanism constituted by a narrowing gap (step) on the downstream side of a dimple, while (b) is a drawing explaining a negative-pressure generation mechanism constituted by an expanding gap (step) on the upstream side of a dimple.
[FIG. 6] Plan view of key areas showing an example where grooves with directionality are provided at the bottom of the cavitation formation area in the dimple, as it pertains to Example 1 of the present invention.
[FIG. 7] Plan view of key areas showing an example where continuous grooves that communicate with the high-pressure fluid side, etc., are provided in alocation other than the cavitation formation area in the dimple, as it pertains to Example 2 of the present invention.
[FIG. 8] Plan view of key areas showing an example where grooves with directionality as provided in the cavitation formation area in the dimple are formed symmetrical to the sliding direction of the sealing face with reference to the center of the sliding direction of the dimple, as it pertains to Example 3 of the present invention.

### {DESCRIPTION OF EMBODIMENTS}

Modes for carrying out the present invention are explained below based on examples. It should be noted, however, that, unless otherwise specified expressly, the dimensions, materials, shapes, and relative arrangements, etc., of the components described in these examples are not intended to limit the scope of the present invention to these dimensions, materials, shapes, and relative arrangements, etc.

### Example 1

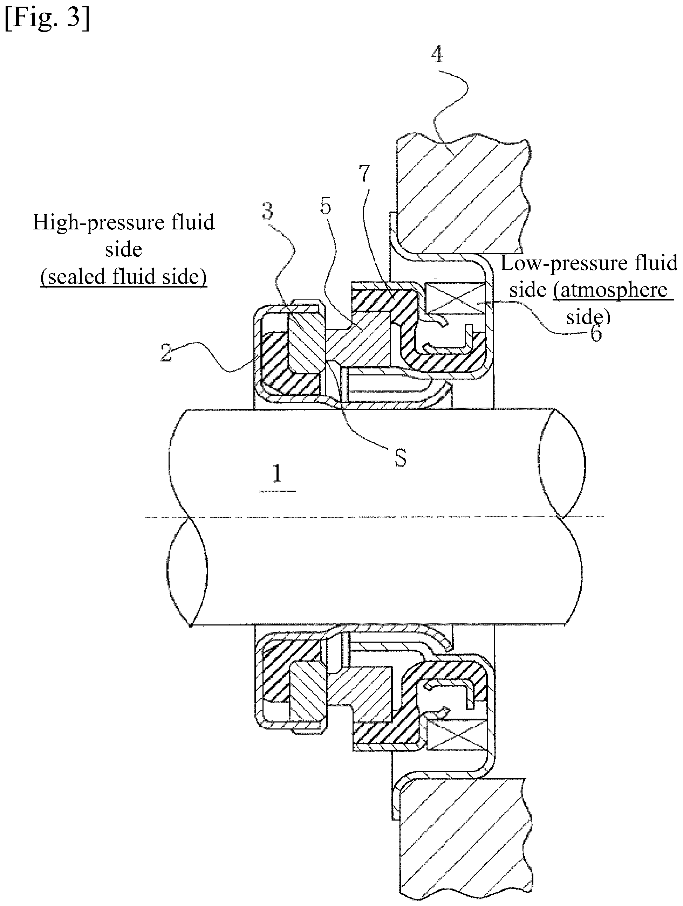

The sliding component pertaining to Example 1 of the present invention is explained by referring to Figs. 3 to 6.

It should be noted that, in this example, the sliding component represents a part that constitutes a mechanical seal.

FIG. 3 is a longitudinal section view showing an example of a mechanical seal, where the mechanical seal is of the inside type that seals the fluid on the high-pressure fluid side that tends to flow in the direction from the outer periphery to inner periphery of the sealing face, comprising: an annular rotating ring 3 provided, on a rotational axis 1 that drives a pump impeller (not illustrated) on the high-pressure fluid side, via a sleeve 2 in a manner rotatable integrally with the rotational axis 1; and an annular stationary ring 5 provided on a housing 4 of the pump in a manner not rotatable but movable in the axial direction; with the two rings sliding relatively in a manner contacting each other via their sealing faces S that have been mirror-surface-finished by lapping, etc., by means of a coiled wave spring 6 and bellows 7 biasing the stationary ring 5 in the axial direction. In other words, this mechanical seal prevents flow-out of the sealed fluid toward the atmosphere side from the outer periphery of the rotational shaft 1, using the sealing faces S of the rotating ring 3 and stationary ring 5.

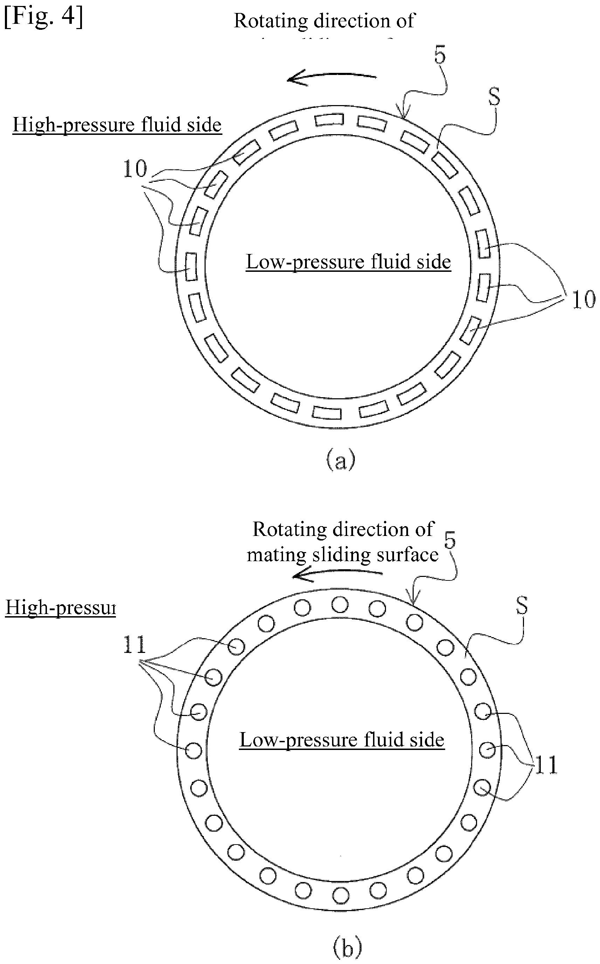

FIG. 4 shows the sealing faces of sliding parts pertaining to Example 1 of the present invention, explaining examples where a dimple is formed on the sealing face of the stationary ring 5 in FIG. 3.

In FIG. 4 (a), multiple quadrilateral dimples 10 are provided on the sealing face S in the circumferential direction. The dimples 10 do not communicate with the high-pressure fluid side or low-pressure fluid side, and the respective dimples 10 are provided independent of one another. The number of dimples 10 and their area and depth are set to optimal values according to the diameter and surface width of the stationary ring 5, differential pressure between the high-pressure fluid side and low-pressure fluid side, and other conditions, but preferably the dimples have a large area and shallow depth from the viewpoints of fluid lubrication action and formation of liquid film.

Note that in FIG. 4 (a), the dimples 10 are shaped in such a way that their two sides, namely the inner diameter side and outer diameter side, form arcs whose center corresponds to the center of the stationary ring 5, with the remaining two sides in the circumferential direction, namely the upstream side and downstream side, comprised of straight lines; however, they can have any other shape such as rectangle, square or polygon.

In FIG. 4 (b), multiple dimples 11 having a circular shape are provided in the circumferential direction. Just like in FIG. 4 (a), the dimples 11 do not communicate with the high-pressure fluid side or low-pressure fluid side and the respective dimples 11 are provided independent of one another. Preferably the dimples 11 have a large diameter and are shallow, but because the size and depth of dimples 11 vary depending on the viscosity of the fluid as well as its actuation speed and film pressure and must thus be designed in consideration of various conditions in a comprehensive manner, it is difficult to determine the dimple size and depth in uniform ways.

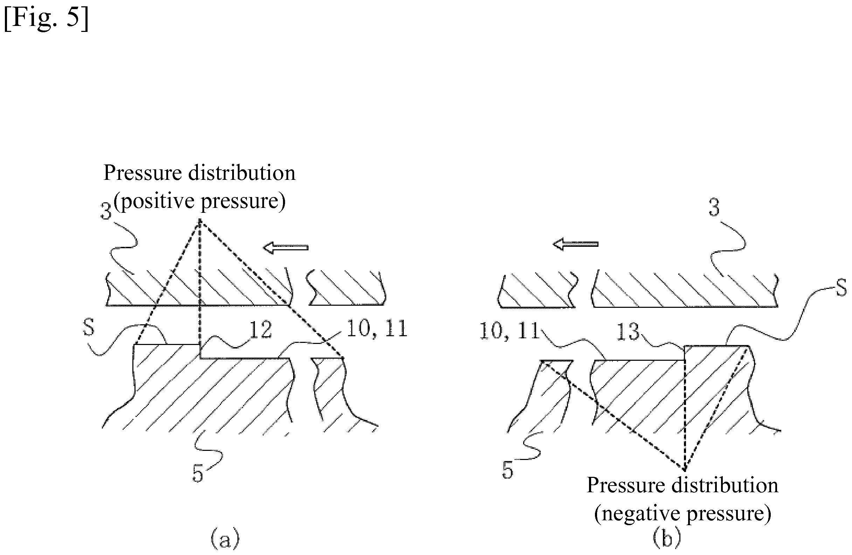

Now, the positive-pressure generation mechanism and negative-pressure generation mechanism are explained by referring to FIG. 5 under the assumption that dimples conforming to the present invention are provided.

In FIG. 5 (a), the rotating ring 3 moves in a rotational manner relative to the stationary ring 5 in the counterclockwise direction, as shown by the arrow, but if dimples 10, 11 are formed on the sealing face S of the stationary ring 5, a narrowing gap (step) 12 exists on the downstream side of each of the dimples 10, 11. The sealing face of the mating rotating ring 3 is flat.

As the rotating ring 3 moves relatively in the direction shown by the arrow, the fluid present between the sealing faces of the rotating ring 3 and stationary ring 5 tends, because of its viscous property, to follow the rotating ring 3 by moving in the moving direction of the rotating ring 3, and when this occurs, the dynamic pressure (positive pressure) shown by the broken line generates due to the presence of the narrowing gap (step) 12.

In FIG. 5 (b), the rotating ring 3 moves in a rotational manner relative to the stationary ring 5 in the counterclockwise direction, as shown by the arrow, but when dimples 10, 11 are formed on the sealing face S of the stationary ring 5, an expanding gap (step) 13 exists on the upstream side of each of the dimples 10, 11. The sealing face of the mating rotating ring 3 is flat.

As the rotating ring 3 moves relatively in the direction shown by the arrow, the fluid present between the sealing faces of the rotating ring 3 and stationary ring 5 tends, because of its viscous property, to follow the rotating ring 3 by moving in the moving direction of the rotating ring 3, and when this occurs, the dynamic pressure (negative pressure) shown by the broken line generates due to the presence of the expanding gap (step) 13.

Accordingly, negative pressure generates on the upstream side of the dimples 10, 11, while positive pressure generates on the downstream side, and cavitation occurs in the negative-pressure generation area on the upstream side.

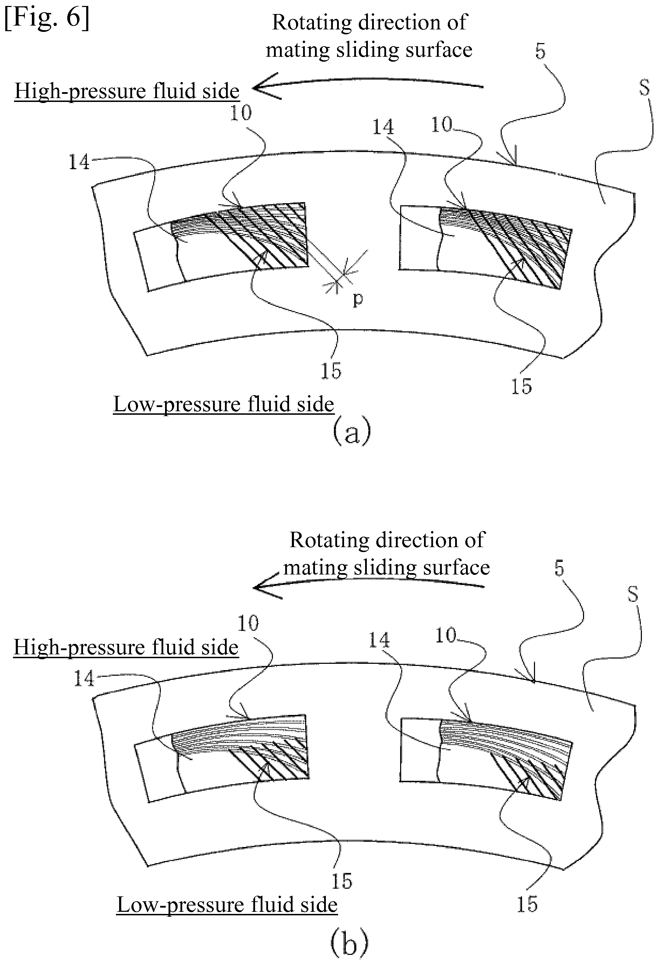

FIG. 6 is a plan view of key areas showing an example where grooves with directionality are provided at the bottom of the cavitation formation area in the dimple.

The sealing face S of the stationary ring 5 has multiple quadrilateral dimples 10 provided on it in the circumferential direction, where the dimples 10 do not communicate with the high-pressure fluid side or low-pressure fluid side and the respective dimples 10 are provided independent of one another.

As the sealing face of the mating side (sealing face of the rotating ring 3) moves in a rotational manner relative to the stationary ring 5 in the counterclockwise direction, cavitation occurs on the upstream side of the dimple 10 and a cavitation area denoted by 14 is formed (hereinafter referred to as "cavitation formation area 14"). Also, grooves 15 with directionality are provided in the cavitation formation area 14 in the dimple 10. According to the invention, the grooves 15 with directionality are provided in only some parts of a cavitation formation area 14 provided on an upstream side in each dimple. Furthermore, the grooves 15 with directionality are formed at the bottom of the dimple 10 and their width and depth are not specifically limited, so long as the edges of the grooves 15 with directionality act upon the gas-liquid interface as geometrical barriers to prevent the movement of the streak-like flow of fluid to pass over the grooves 15 with directionality, as explained in the earlier section of "Means for Solving the Problems {Principles}."

In addition, the directionality of grooves 15 is determined by how the fluid should be controlled and, in FIG. 6, they are inclined in the counterclockwise direction from the inner diameter side toward the outer diameter side so as to push back the fluid in the dimple 10 to the high-pressure fluid side and thereby prevent it from leaking to the low-pressure fluid side. As explained earlier, the cavitation is internally filled with gas whose viscosity is sufficiently low compared to that of liquid, and the resulting good fluidity keeps the pressure in the cavitation constant, which in turn acts to control the streak-like flow regardless of the differential pressure between the inner periphery and outer periphery of the sealing face S, and therefore when the grooves 15 have the directionality as shown in FIG. 6, the grooves 15 provided in the cavitation formation area 14 cause the streak-like flow of fluid in the dimple 10 to move to a certain degree along the edges of the first groove 15 on the upstream side, and then move to a certain degree along the edges of the second groove 15, and as this is repeated in succession, the fluid is controlled in a manner pushed back to the high-pressure fluid side as shown by the double lines.

It should be noted that the pitch p of the grooves 15 with directionality only needs to be set to an optimal value from design viewpoints and is not limited in any way.

While the grooves 15 with directionality shown in FIG. 6 (a) are provided over the entire area from the low-pressure fluid side to high-pressure fluid side of the dimple 10 in the radial direction, those shown in FIG. 6 (b) are provided only on the low-pressure fluid side. In FIG. 6 (a), the control of the streak-like flow of fluid by the grooves 15 with directionality is implemented over the entire area from the low-pressure fluid side to high-pressure fluid side of the dimple 10 in the radial direction, while in FIG. 6 (b), the control of the streak-like flow of fluid by the grooves 15 with directionality is implemented on the low-pressure fluid side of the dimple 10. When the differential pressure between the low-pressure fluid side and high-pressure fluid side is large, preferably the grooves 15 with directionality are provided over the entire area from the low-pressure fluid side to the high-pressure fluid side in the radial direction, as shown in FIG. 6 (a), but when the differential pressure between the low-pressure fluid side and high-pressure fluid side is small, leakage is prevented even if the grooves 15 with directionality are provided only on the low-pressure fluid side, as shown in FIG. 6(b).

It should be noted that, besides only on the low-pressure fluid side, the grooves 15 with directionality may be provided only on the high-pressure fluid side or only at the center in the radial direction, which means that, in essence, the area or areas where the grooves 15 with directionality are to be provided can be selected as deemed appropriate according to the level of differential pressure, etc.

### Example 2

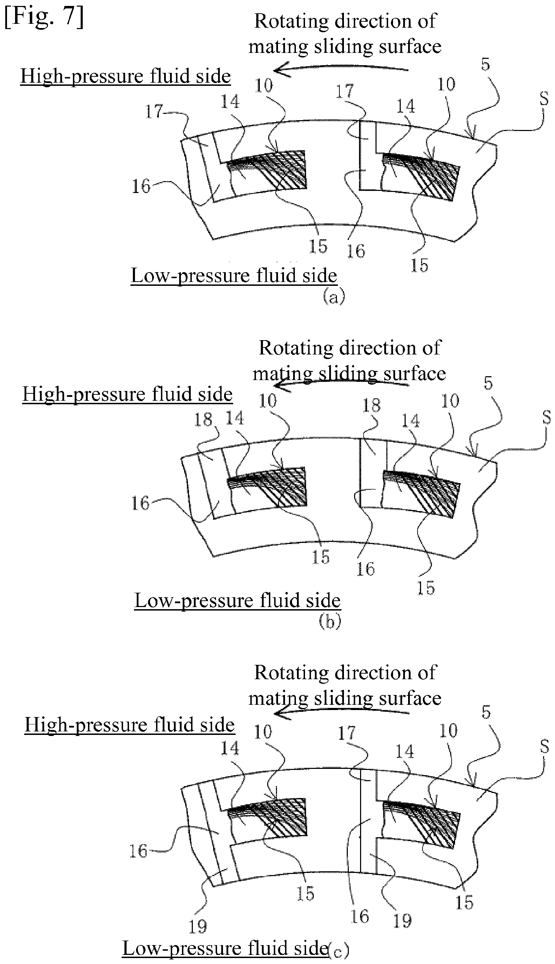

FIG. 7 is a plan view of key areas showing an example where continuous grooves that communicate with the high-pressure fluid side, etc., are provided in a location other than the cavitation formation area in the dimple, as it pertains to Example 2 of the present invention.

It should be noted that, in FIG. 7, the symbols corresponding to those used in the first embodiment indicate the same members denoted by them in Example 1, and duplicate explanations are omitted.

In FIG. 7 (a), the cavitation formation area 14 is formed on the upstream side in the dimple 10, while dynamic pressure generates and a positive pressure area 16 is formed in another location or specifically on the downstream side. And, continuous grooves 17 that communicate with the high-pressure fluid side are provided in the positive pressure area 16. The continuous grooves 17 are as deep as or deeper than the concaved dimples 10. Also, the continuous grooves 17 are wide enough to release the positive pressure.

When the continuous grooves 17 that communicate with the high-pressure fluid side are provided in the positive pressure area 16 on the downstream side of the dimple 10, the positive pressure on the downstream side of the dimple 10 is released and thus the pressure on the upstream side decreases, and consequently cavitation occurs more easily on the upstream side. Accordingly, the cavitation formation area 14 extends to near the downstream side of the dimple 10 and the direction of the streak-like flow of fluid due to the cavitation formation area 14 can be controlled much better as a result. Also, fluid that has flowed into the positive pressure area 16 can be returned to the high-pressure fluid side.

In FIG. 7 (b), continuous grooves 18 of reverse-L shape that communicate with the high-pressure fluid side are provided in the positive pressure area 16. These reverse-L shaped continuous grooves 18 also communicate with parts of the downstream side of the cavitation formation area 14 in addition to the positive pressure area 16. Accordingly, the positive pressure on the downstream side of the dimple 10 is released more and the direction of the streak-like flow of fluid due to the cavitation formation area 14 can be controlled much better as a result. Also, fluid that has flowed in and travelled to near the downstream side of the cavitation formation area 14 and fluid that has flowed into the positive pressure area 16 can be returned to the high-pressure fluid side.

In FIG. 7 (c), continuous grooves 17 that communicate with the high-pressure fluid side and continuous grooves 19 that communicate with the low-pressure fluid side are provided in the positive pressure area 16. Accordingly, the positive pressure on the downstream side of the dimple 10 is released to pressure near the pressure on the low-pressure side and the direction of the streak-like flow of fluid due to the cavitation formation area 14 can be controlled much better as a result.

It should be noted that, while fluid that has flowed into the positive pressure area 16 is easily let flow to the low-pressure fluid side, which seems not desirable as it may cause leakage when this example is applied to a seal device, this example can still be applied to sliding parts in general including bearings because some degree of leakage should be permitted in the case of bearings, etc., and their lubrication performance is expected to improve as a result of applying this example.

### Example 3

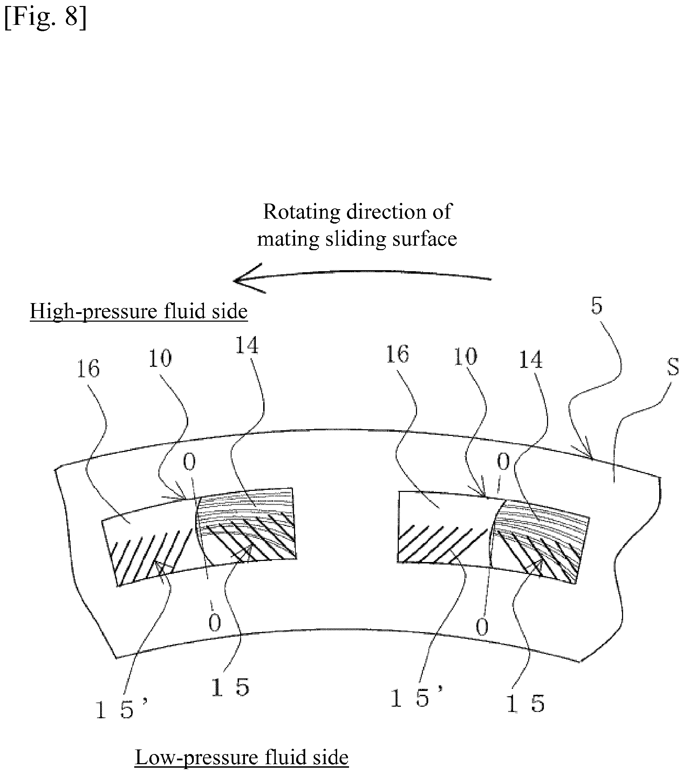

FIG. 8 is a plan view of key areas showing an example where grooves with directionality provided in the cavitation formation area in the dimple are formed symmetrical relative to the sliding direction of the sealing face with reference to the center of the sliding direction of the dimple, as it pertains to Example 3 of the present invention.

It should be noted that, in FIG. 8, the symbols corresponding to those used in the first embodiment indicate the same members denoted by them in Example 1, and duplicate explanations are omitted.

While the sliding parts shown in Examples 1 and 2 can be applied only when they rotate in one direction, Example 3 can be applied when they rotate in two different directions.

In FIG. 8, grooves 15, 15' with directionality provided in the cavitation formation area in the dimple 10 are formed in such a way that their directions become symmetrical relative to the sliding direction of the sealing face over the radius line O-O passing through the center of the sliding direction of the dimple 10. In Figs. 6 and 7, the cavitation formation area 14 is set in such a way that it extends over more than a half of the dimple 10 from its upstream side, but in FIG. 8, the cavitation formation area 14 is set in such a way that it extends only over approximately half of the dimple 10 from its upstream side, and even when the rotating direction of the mating sealing face reverses to the clockwise direction, the cavitation formation area 14 still extends over approximately half of the dimple 10 from its upstream side. For example, one way to do this is to increase the length of the dimple 10 in the circumferential direction or make the dimple 10 shallower so that the formed negative-pressure generation area becomes shorter in the circumferential direction. In addition, even if the formed cavitation formation area 14 extends to the downstream side of the radius line O-O, the streak-like flow of fluid remains controlled in the outer radial direction on the upstream side and does not pass over the grooves 15' whose directionality is opposite that on the downstream side, and consequently the control of the streak-like flow of fluid is not affected and desired control can be implemented.

In the case of FIG. 8, the cavitation formation area 14 is formed over approximately half of the dimple 10 from its upstream side, while the positive pressure area 16 is formed over approximately half of it from its downstream side, so that the grooves 15 with directionality in the cavitation formation area 14 act upon the streak-like flow of fluid in a manner directing it to the high-pressure fluid side, while the grooves 15' with directionality in the positive pressure area 16 act upon the streak-like flow of fluid in a manner directing it to the low-pressure fluid side, which may lead to a tendency to leak. In the case of this example, however, fluid is controlled to travel to the high-pressure fluid side in the cavitation formation area 14, and the amount of fluid that flows into the positive pressure area 16 is small and pressure does not increase, and therefore should some fluid travel to the low-pressure fluid side, it would be sealed by the sealing face S before reaching the low-pressure fluid side and therefore leakage should not occur.

The foregoing explained the examples of the present invention using the drawings, but specific constitutions of the present invention are not limited to these examples and other changes and additions are also included in the scope of the present invention so long as they do not deviate from the key points of the present invention.

For example, while the aforementioned examples explained using the sliding component as one of the pair of rotating seal ring and stationary seal ring in a mechanical seal device, but it is also possible to use it as a sliding component for a bearing that slides against a rotating axis with lubrication oil sealed on one side of its cylindrical sealing face in the axial direction.

In addition, the aforementioned examples explained situations where high-pressure fluid is sealed on the outer periphery side, for example, but the present invention can also be applied when high-pressure fluid is present on the inner periphery side, in which case the grooves with directionality only need to be provided in the opposite directions.

Furthermore, while the aforementioned examples primarily explained situations where the dimple has a quadrilateral shape, the shape of the dimple is not limited to quadrilateral and it can also be circular, oval or polygonal.

### {REFERENCE SIGNS LIST}

- 1: Rotational axis
- 2: Sleeve
- 3: Rotating ring
- 4: Housing
- 5: Stationary ring
- 6: Coiled wave spring
- 7: Bellows
- 10: Dimple
- 11: Dimple
- 12: Rayleigh step
- 13: Reverse Rayleigh step
- 14: Cavitation formation area
- 15: Groove with directionality
- 16: Positive pressure area
- 17: Continuous groove
- 18: Continuous groove
- 19: Continuous groove

## Claims

1. A sliding component comprising dimples (10), which are provided on one sealing face (S) of the sliding component, the sliding component being configured as one of a pair of sliding parts (3, 5) that mutually slide relative to each other, **characterized in that** a plurality of grooves (15) with directionality are provided in only some parts of the bottom of a cavitation formation area (14) provided on an upstream side in each dimple (10, 11).

2. A sliding component according to Claim 1, **characterized in that** the grooves (15) with directionality are provided at least on a low-pressure fluid side of the cavitation formation area (14).

3. A sliding component according to Claim 1 or 2, **characterized in that** continuous grooves (17, 18, 19) that communicate with a high-pressure fluid side are provided at least in a location other than the cavitation formation area (14) in the dimple (10, 11).

4. A sliding component according to Claim 1 or 2, **characterized in that** the grooves (15) with directionality provided in the cavitation formation area (14) in the dimple (10, 11) are formed such that their directions become symmetrical relative to a sliding direction of the sealing face (S) with reference to a center of a sliding direction of the dimple (10, 11).

## Patentansprüche

1. Gleitelement mit Vertiefungen (10), welche auf einer Dichtfläche (S) des Gleitelements angeordnet sind, wobei das Gleitelement als eines von einem Paar von Gleitelementen (3, 5) ausgestaltet ist, welche relativ zueinander gleiten, **dadurch gekennzeichnet, dass** eine Mehrzahl von Nuten (15) mit Richtungsabhängigkeit in nur einigen Teilen des Bodens eines Kavitationsbildungsbereichs (14) angeordnet ist, welcher an einer stromaufwärts liegenden Seite in jeder Vertiefung (10, 11) angeordnet ist.

2. Gleitelement nach Anspruch 1, **dadurch gekennzeichnet, dass** die Nuten (15) mit Richtungsabhängigkeit zumindest an einer Niedrigdruckflüssigkeitsseite des Kavitationsbildungsbereichs (14) angeordnet sind.

3. Gleitelement nach Anspruch 1 oder 2, **dadurch gekennzeichnet, dass** kontinuierliche Nuten (17, 18, 19), welche mit einer Hochdruckflüssigkeitsseite kommunizieren, zumindest an einer anderen Stelle als dem Kavitationsbildungsbereich (14) in der Vertiefung (10, 11) angeordnet sind.

4. Gleitelement nach Anspruch 1 oder 2, **dadurch gekennzeichnet, dass** die Nuten (15) mit Richtungsabhängigkeit, welche in dem Kavitationsbildungsbereich (14) in der Vertiefung (10, 11) angeordnet sind, so ausgebildet sind, dass ihre Richtungen symmetrisch relativ zu einer Gleitrichtung der Dichtfläche (S) gegenüber einer Mitte einer Gleitrichtung der Vertiefung (10, 11) werden.

## Revendications

1. Élément coulissant comprenant des rides (10) prévues sur une surface d'étanchéité (S) de l'élément coulissant, l'élément coulissant étant configuré en tant que l'une d'une paire de parties coulissantes (3, 5) coulissant l'une par rapport à l'autre, **caractérisé en ce qu'**une pluralité de rainures (15) ayant une directionnalité est prévue uniquement dans certaines parties de la base d'une zone (14) de formation de cavitation prévue sur un côté amont dans chaque ride (10, 11).

2. Élément coulissant selon la revendication 1, **caractérisé en ce que** les rainures (15) ayant une directionnalité sont prévues au moins sur un côté fluide basse pression de la zone (14) de formation de cavitation.

3. Élément coulissant selon la revendication 1 ou 2, **caractérisé en ce que** des rainures continues (17, 18, 19) communiquant avec un côté fluide haute pression sont prévues au moins à un emplacement autre que la zone (14) de formation de cavitation dans la ride (10, 11).

4. Élément coulissant selon la revendication 1 ou 2, **caractérisé en ce que** les rainures (15) ayant une directionnalité, prévues dans la zone (14) de formation de cavitation dans la ride (10, 11), sont formées de telle sorte que leurs directions deviennent symétriques par rapport à une direction de coulissement de la face d'étanchéité (S) en référence à un centre d'une direction de coulissement de la ride (10, 11).
